# EUROPEAN PATENT APPLICATION

(11) **EP 3 617 557 A1**
(43) Date of publication of application: **04.03.2020**
(21) Application number: 19189666.1
(22) Date of filing: 01.08.2019
(51) Int. Cl.: F16H 57/04, F02C 7/36, F02C 3/00

(54) **AUXILIARY OIL DISTRIBUTION SYSTEM AND GAS TURBINE ENGINE WITH AN AUXILIARY OIL DISTRIBUTION SYSTEM**

(30) Priority: 23.08.2018 DE 102018120613
(71) Applicant: Rolls-Royce Deutschland Ltd & Co KG, 15827 Blankenfelde-Mahlow (DE)
(72) Inventor: BAVA, Alberto, 15827 Blankenfelde-Mahlow (DE)
(74) Representative: Maikowski & Ninnemann Patentanwälte Partnerschaft mbB

(57) **Abstract**

Embodiments of the invention relate to an auxiliary oil distribution system of a geared turbofan engine (10), with at least one part (55, 56) of the oil transport device (50) driveably connected with at least one rotating part (32, 34, 38) of an epicyclic gearbox (30) of the geared turbofan engine (10), at least one oil guiding device (51) to collect oil in the gearbox (30) and/or outside the gearbox (30) and to direct the oil to an oil target location (60).

## Description

The present disclosure relates to an auxiliary oil distribution system according to claim 1 and a gas turbine engine according to claim 14.

In gas turbine engines, in particular geared turbo fan engines, the effective and secure oil distribution e.g. to gears and bearings is very important. The sufficient oil distribution needs to be established even under failure of some component. An oil scavenge system is known from US 2013 / 331222 A1.

Therefore, secure oil distribution systems are required.

According to a first aspect an auxiliary oil distribution system (or an auxiliary oil pump system) of a geared turbofan engine is provided. This auxiliary pump system is installed in addition to the normal oil pump system to distribute oil for the gearbox even the mail oil pump system is not working nominally.

The system comprises an oil transport device with at least one part driveably rotating connected with an epicyclic gearbox of the geared turbofan engine. The rotation of the rotating part provides at least some of the energy to distribute the oil.

To capture the oil at least one oil guiding device is used to collect oil in the gearbox and/or outside the gearbox and to direct the oil to an oil target location. Typically, the oil is gathered within a housing of the gearbox and then directed towards the target location at the gearbox.

The oil guiding device can e.g. comprise at least one scoop device and/or at least one oil channel to direct an oil flow to the oil target location. The channel can e.g. lead from a high pressure side of the oil distributing device to a low pressure side of the oil distributing device.

In a further embodiment, the at least one rotating part is a sun gear, a planet carrier or a ring gear of the epicyclic gearbox driveably connected to the oil transport device so that it rotates with the same rotational speed as the rotating part. Epicyclic gearboxes can have two different rotating parts, one of them is used to drive the oil distribution.

In one embodiment, the driving force of the oil in the at least one oil transport device is a pressure difference and/or a centrifugal force generated through the rotating part acting on the oil transport device. In particular, the centrifugal force acting on the oil at the rotating oil transport device can be used to enhance the oil flow due to a pressure difference.

In a further development least one part of the oil transport device is connected to a static part of the epicyclic gearbox, in particular the planet carrier, the ring gear or the sun gear.

Furthermore, the oil transport device can in one embodiment comprise a plurality of epicyclic pump wheels in oil cavities, the epicyclic pump wheels are driveably connected to the oil transport device, i.e. the energy of the rotating part drives the pump wheels e.g. through some geared connection so that the oil is transported towards the target location. Using epicyclic pump wheels in cavities a rather flat and compact design of the oil transport device is possible.

There are different possibilities to drive the epicyclic pump wheels and thereby transporting the oil. The rotating part of the oil distribution system can e.g. be a sun gear, a carrier or a ring gear of the oil distribution system, i.e. the oil distribution system comprises an epicyclic system as the epicyclic gearbox.

In one embodiment, the epicyclic pump wheels are located in a movable outer ring of the oil transport device meshing with a toothed rack circumferentially mounted on an inner ring of the oil transport device. The inner ring is fastened to the planet carrier of the epicyclic gearbox. That means that the planet carrier is the rotating part, providing the rotation for the oil distribution system. The epicyclic pump wheels are preceding around the inner ring, the inner ring being static relative to the outer ring.

Alternatively the epicyclic pump wheels in an outer ring of the oil transport device mesh with a toothed rack circumferentially mounted on an inner ring of the oil transport device, the inner ring being fastened to a static part of the gearbox. In this embodiment the outer ring is driveably connected with the rotating part, in particular the planet carrier of the epicyclic gearbox, the pump wheels preceding around the inner ring.

Also in an alternative embodiment, the epicyclic pump wheels are located in an outer ring of the oil transport device meshing with a toothed rack circumferentially mounted at the inside of the outer rim of the oil transport device. A housing of the pump wheels is driveably connected with the rotating part, i.e. the ring gear of the epicyclic gearbox, the pump wheels preceding around the toothed rack.

For a compact design the oil distribution device housing the epicyclic pump wheels in the oil cavities has a flat ring-like or flat plate shape.

In one embodiment, the target location for the oil flow is at the gearbox, in particular a journal bearing, in particular of the planet carrier.

The epicyclic gearbox can be in planetary or star configuration.

The issue is also addressed by a gas turbine engine with the features of claim 14.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example, the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements, the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example, at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000 m to 15000 m, for example in the range of from 10000 m to 12000 m, for example in the range of from 10400 m to 11600 m (around 38000 ft), for example in the range of from 10500m to 11500 m, for example in the range of from 10600 m to 11400 m, for example in the range of from 10700 m (around 35000 ft) to 11300 m, for example in the range of from 10800 m to 11200 m, for example in the range of from 10900m to 11100 m, for example on the order of 11000 m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4A shows a frontal view of an oil transporting device of a first embodiment of an auxiliary oil distribution system driveably connectable to a carrier of an epicyclic gearbox;
Figure 4B shows a sectional view as indicated by A-A in Fig. 4A;
Figure 5A shows a perspective cut-away view of a gearbox with the first embodiment of an auxiliary oil distribution system;
Figure 5B shows an enlarged section of Figure 5A;
Figure 6A shows a frontal view of an oil transporting device of a second embodiment of an auxiliary oil distribution system driveably connectable to a carrier of an epicyclic gearbox;
Figure 6B shows a sectional view as indicated by A-A in Fig. 6A;
Figure 7A shows a frontal view of an oil transporting device of a third embodiment of an auxiliary oil distribution system driveably connectable to a carrier of an epicyclic gearbox;
Figure 7B shows a sectional view as indicated by A-A in Fig. 7A;
Figure 8A shows a perspective cut-away view of a gearbox with the third embodiment of an auxiliary oil distribution system;
Figure 8B shows an enlarged section of Figure 8A.

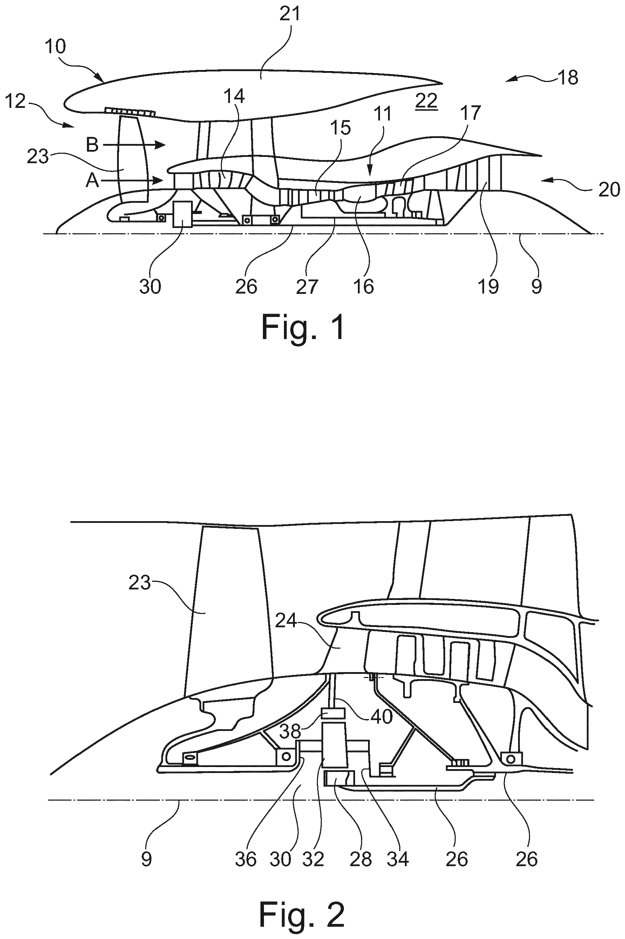

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

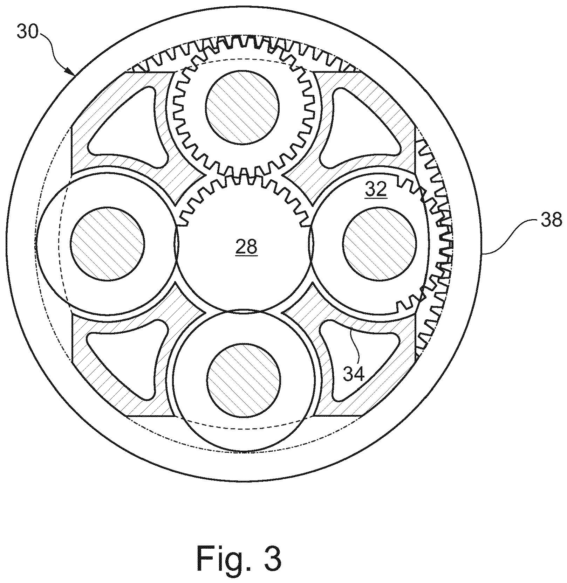

The epicyclic gearbox 30 is shown by way of example in greater detail in Figure 3. Each of the sun gear 28, planet gears 32 and ring gear 38 comprise teeth about their periphery to intermesh with the other gears. However, for clarity only, exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The distribution of oil in connection of the gearbox 30 is of great importance to the functionality of the overall gas turbine engine 10. In case of a malfunction, an oil distribution needs to be maintained. This is the purpose of an auxiliary oil distribution system (auxiliary oil pump). Several embodiments for an auxiliary oil distribution system will be described in the following.

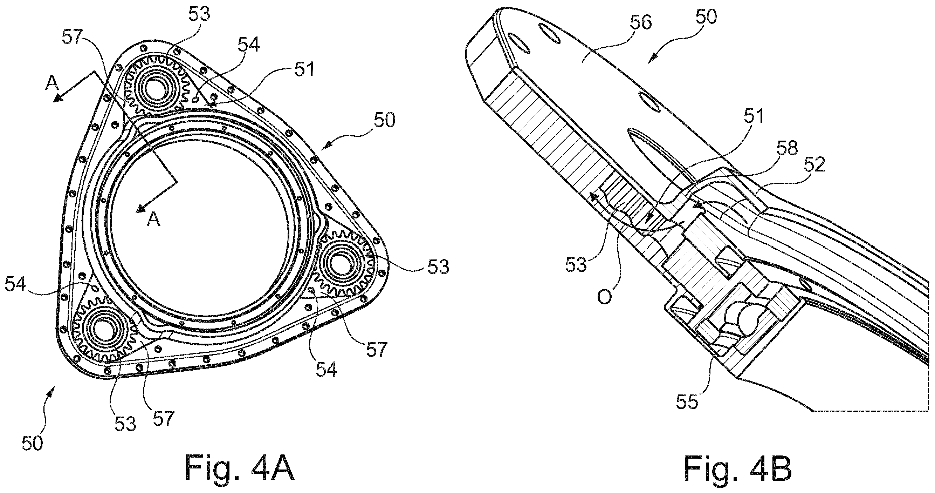

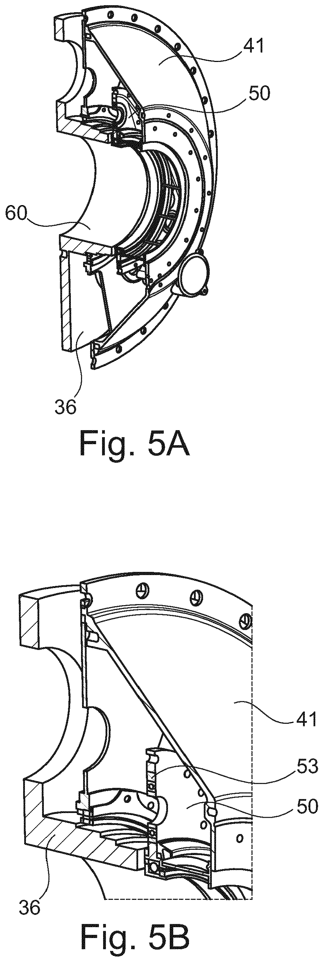

In Fig. 4A, 4B, 5A, and 5B a first embodiment is shown. In this embodiment the energy to transport the oil (oil flow O in Fig. 4B) to a target location 60 is - at least in part - generated by the rotational movement of the planet carrier 36 (see Figure 2 and 3).

The planet carrier 36 is best seen in Figure 5A. At the distal end of the carrier 36 an oil transport device 50 is coaxially mounted. The oil transport device 50 is essentially a ring-shaped device, the outer contour in a frontal view - as seen in Figure 4A - is essentially triangular.

An inner ring 55 of the oil transport device 50 is rigidly fastened to the planet carrier 36. An outer ring 56 of the oil transport device 50 can rotate around the inner ring 55 (Figure 4B). At the outer rim of the inner ring 55 a toothed rack is positioned which meshes with pump wheels 53 housed in cavities 57 (see Figure 4A) within the oil transport device 50.

Since the planet carrier 36 rotates in operation of the engine 10, the rotation is transmitted via the toothed rack on the inner ring 55 to the pump wheels 53. The outer ring 56 of the oil transport device 50 rotates with the same rotational speed as the planet carrier 34. The motion of the oil transport device 50 is transmitted through an interference spigot with the carrier 36. The pump wheels 53 rotate with the outer ring 56 well as around their own axis meshing with the inner ring 55.

Oil within a gearbox housing 41 (Figures 5A, 5B) is transported towards a target location 60, e.g. a journal bearing in the planet carrier 36, the journal bearing not shown in Figures 5A, 5B.

The oil flow is directed - referring in Figure 5B - from the front to the rear, i.e. directed towards the planet carrier 36.

The oil flow O is best seen in Fig. 4B which is a cut section of Figure 4A.

In the corners of the oil transport device 50 the pump wheels 53 are mounted, meshing with the circumferential toothed rack of the inner ring 55. One of the pump wheels 53 is seen in the cut section of Figure 4B and 5B.

The rotation of the outer ring 56 of the oil transport device 50 causes the pump wheels 53 to rotate. This creates a pressure difference across the oil guiding device 51 as a part of the oil transport device 50 (see Figure 4B).

With reference to Figure 4B the oil is taken from the front side of the oil transport device 50 and is flowing through the oil guiding device 51 (see oil flow O through an oil channel 58 in Figure 4B) towards the pump wheels 53 and then through oil holes 54 towards the target location 60. The target location here is the planet carrier 36 of the gearbox 30. The oil coming from the auxiliary oil distribution system is rotating with the gearbox planet carrier 36, so that it and other parts of the gearbox 30 can be lubricated without any other part for transferring oil between the two components at different speeds.

The oil flow O is guided by a scoop device 52 (see Figure 4B) which is circumferentially positioned at the entrance of the oil channel 58 of the oil guiding device 51. With this scoop device 52 oil being accelerated radially outwards due to a centrifugal force is captured and guided into the channel 58 of the oil guiding device 51.

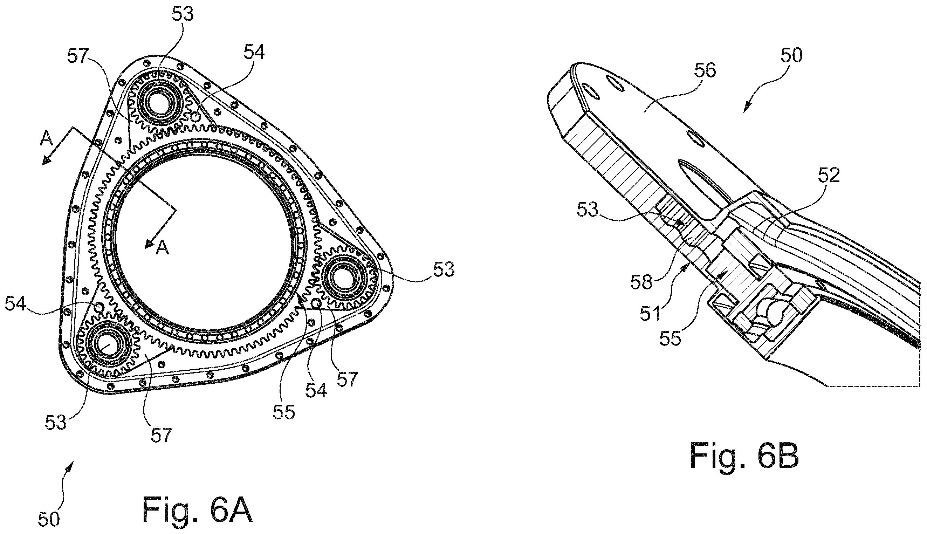

In Figures 6A, 6B a second embodiment is shown which has essentially the same functionality as the first embodiment so reference can be made to the respective description above.

In the second embodiment, the oil transport device 50 comprises an inner ring 55 with the toothed rack driving the pump wheels. The inner ring 55 is connected to a static part of the gear box 30 and the outer ring 56 of the oil transport device 50 is connected to the planet carrier 38, i.e. the pump wheels are driven through a rotation of the outer ring 56 rather than the inner ring 55 in the first embodiment.

The oil flow through the oil channel 58 and pumping of the oil by the pump wheels 53 is analogue to the first embodiment.

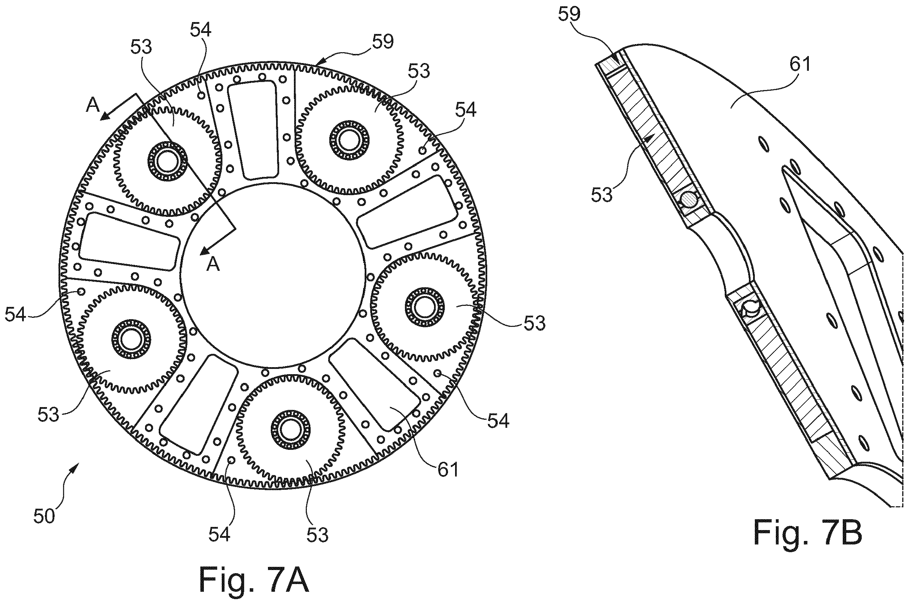

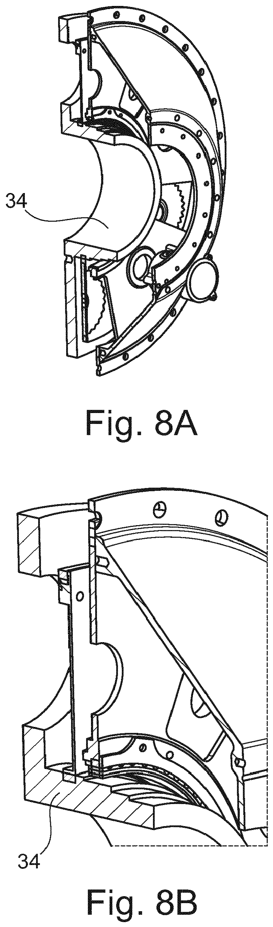

In Figures 7A, 7B, 8A and 8B a third embodiment is shown which has essentially the same functionality as the first embodiment so reference can be made to the respective description above.

In this embodiment a ring gear 59 with a toothed rack at the insides of the outer circumference of the oil transport device 50 is connected to a static part. The housing of the oil transport device 50 operates as carrier plate 61 connected to a rotating part of the gearbox 30, i.e. the planet carrier 34. Therefore, the carrier plate 61 rotates and drives the pump wheels 53 which then transport the pol as in the other embodiments.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### List of reference numbers

- 9: principal rotational axis
- 10: gas turbine engine
- 11: engine core
- 12: air intake
- 14: low-pressure compressor
- 15: high-pressure compressor
- 16: combustion equipment
- 17: high-pressure turbine
- 18: bypass exhaust nozzle
- 19: low-pressure turbine
- 20: core exhaust nozzle
- 21: nacelle
- 22: bypass duct
- 23: propulsive fan
- 24: stationary support structure
- 26: shaft
- 27: interconnecting shaft
- 28: sun gear
- 30: gearbox
- 32: planet gears
- 34: planet carrier
- 36: linkages
- 38: ring gear
- 40: linkages
- 41: housing of gearbox

- 50: oil transport device
- 51: oil guiding device
- 52: scoop device
- 53: pump wheels in oil transport device
- 54: oil exit hole
- 55: inner ring of oil transport device
- 56: outer ring of oil transport device
- 57: cavity for pump wheel
- 58: oil channel
- 59: ring gear of oil transport device
- 60: oil target location
- 61: carrier plate of oil transport device

- A: core airflow
- B: bypass airflow
- O: oil flow

## Claims

1. Auxiliary oil distribution system of a geared turbofan engine (10), with
at least one part (55, 56) of the oil transport device (50) driveably connected with at least one rotating part (32, 34, 38) of an epicyclic gearbox (30) of the geared turbofan engine (10),
at least one oil guiding device (51) to collect oil in the gearbox (30) and/or outside the gearbox (30) and to direct the oil to an oil target location (60).

2. Auxiliary oil distribution system, according to claim 1, wherein the oil guiding device (51) comprises at least one scoop device (52) and/or at least one oil channel (58) to direct an oil flow to the oil target location (60).

3. Auxiliary oil distribution system, according to claim 1 or 2, wherein the at least one rotating part is a sun gear (28), a planet carrier (34) or a ring gear (38) of the epicyclic gearbox (30) driveably connected to the oil transport device (50) so that it rotates with the same rotational speed as the rotating device (50).

4. Auxiliary oil distribution system, according to at least one of the preceding claims, wherein the driving force of the oil in the at least one oil transport device (50) is a pressure difference and/or a centrifugal force generated through the rotating part (32, 34, 38) acting on the oil transport device (50).

5. Auxiliary oil distribution system, according to at least one of the preceding claims, wherein at least one part of the oil transport device (50) is connected to a static part of the epicyclic gearbox (50), in particular the planet carrier (34), the ring gear (38) or the sun gear (28).

6. Auxiliary oil distribution system according to at least one of the preceding claims, wherein the oil transport device (50) comprises a plurality of epicyclic pump wheels (53) in oil cavities (57), the pump wheels (53) being driveably connected to the oil transport device (50) for transporting oil towards the target location (60).

7. Auxiliary oil distribution system according to claim 6, wherein the epicyclic pump wheels (53) in an outer ring (56) of the oil transport device (50) mesh with a toothed rack circumferentially mounted on an inner ring (55) of the oil transport device, the inner ring (55) fastened to planet carrier (36) of the epicyclic gearbox (30) as rotating part, the epicyclic pump wheels (53) preceding around the inner ring (55), the inner ring (55) being static relative to the outer ring (56).

8. Auxiliary oil distribution system according to claim 6, wherein the epicyclic pump wheels (53) in an outer ring (56) of the oil transport device (50) mesh with a toothed rack circumferentially mounted on an inner ring (55) of the oil transport device, the inner ring (55) fastened to a static part of the gearbox (30), the outer ring (56) being driveably connected with the rotating part, in particular the planet carrier (36), the pump wheels (53) preceding around the inner ring (55).

9. Auxiliary oil distribution system according to claim 6, wherein the epicyclic pump wheels (53) in an outer ring (56) of the oil transport device (50) mesh with a toothed rack circumferentially mounted at the inside of an outer rim of the oil transport device (50), a housing (61) of the epicyclic pump wheels (53) being driveably connected with the rotating part, in particular the planet carrier (34), the epicyclic pump wheels (53) preceding around the toothed rack.

10. Auxiliary oil distribution system according to at least one of the preceding claims, wherein the oil distribution device (50) housing the epicyclic pump wheels (53) in the oil cavities (57) has a flat ring.-like or flat plate shape.

11. Auxiliary oil distribution system according to at least one of the preceding claims, wherein the target location (60) is at the gearbox (30).

12. Auxiliary oil distribution system according to claim 11, wherein the target location comprises a journal bearing, in particular of the planet carrier.

13. Auxiliary oil distribution system according to at least one of the preceding claims, wherein the epicyclic gearbox (30) is in planetary or star configuration.

14. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan (23) so as to drive the fan (23) at a lower rotational speed than the core shaft (26),
with an auxiliary oil distribution system according to at least one of the claims 1 to 13.
